# EUROPÄISCHE PATENTSCHRIFT

(11) **EP 2 359 667 B1**
(45) Veröffentlichungstag und Bekanntmachung des Hinweises auf die Patenterteilung: **08.08.2012**
(21) Anmeldenummer: 09771654.2
(22) Anmeldetag: 16.11.2009
(51) Int. Cl.: H05B 33/08, H05B 35/00, H05B 41/295, H01J 61/00, H01L 51/00

(54) **KOMBINATIONSLEUCHTE**
COMBINATION LUMINAIRE
LUMINAIRE MIXTE

(30) Priorität: 17.11.2008 DE 102008057606
(43) Veröffentlichungstag der Anmeldung: 24.08.2011
(73) Patentinhaber: Tridonic GmbH & Co KG, 6851 Dornbirn (AT)
(72) Erfinder: GUTLEDERER, Erwin, A-3371 Neumarkt/Ybbs (AT)
(74) Vertreter: Barth, Alexander
(86) Internationale Anmeldenummer: PCT/AT2009/000437
(87) Internationale Veröffentlichungsnummer: WO 2010/054421

(56) Entgegenhaltungen:
- WO-A1-2008/090507
- US-A- 3 078 389

## Beschreibung

Die Erfindung betrifft eine neue Anwendungsmöglichkeit für organische Leuchtdioden (OLEDs), die in jüngerer Zeit als neuartige Lichtquellen auf den Markt gekommen sind. Sie finden beispielsweise Anwendung bei Handydisplays, Computerbildschirmen und Fernsehbildschirmen, und ihre Eigenschaften sind hinreichend in der Literatur beschrieben, so dass sie als bekannt vorausgesetzt werden. Hervorzuheben sind vor allen ihre geringen Herstellungskosten. Trotz großer Fortschritte, die man inzwischen bei der Lichtausbeute von OLEDs erzielt hat, haben sie derzeit allerdings noch den Nachteil einer relativ geringen Lebensdauer, weshalb man OLEDs für allgemeine Beleuchtungszwecke für ungeeignet hält.

Der Erfindung liegt die Aufgabe zugrunde, nach einer Anwendungsmöglichkeit für OLEDs im Beleuchtungsbereich zu suchen, bei der erwähnte Nachteil weniger ins Gewicht fällt.

Die Aufgabe ist gelöst durch eine Kombinationsleuchte, bestehend aus
(a) einer Gasentladungslampe, deren Entladungsgefäß aus transparentem Material, vorzugsweise aus Glas ist, und
(b) einer OLED in Form einer transparenten dünnen Schicht oder Folie, die außen auf dem transparenten Entladungsgefäß aufgebracht ist.

Vorzugsweise eignet sich für diese Anwendung als Gasentladungslampe eine Leuchtstofflampe. Alternativ könnte aber auch beispielsweise eine Hochdrucklampe oder eine Dielektrisch behindert Entladungslampe (DBD-Lampe) als Gasentladungslampe eingesetzt werden.

Die Kombinationsleuchte nutzt die Eigenschaften der beiden Beleuchtungskomponenten in idealer Weise aus.

Im Normalbetrieb, d.h. wenn viel Licht benötigt wird, braucht nur die Gasentladungslampe eingeschaltet zu werden, die ohnehin die größere Lichtleistung zur Verfügung stellt. Die OLED kann dagegen ausgeschaltet bleiben, so dass sich diese Betriebsphase nicht verkürzend auf ihre Lebensdauer auswirkt.

In weniger häufigen Situationen, wo weniger Licht benötigt wird und die Gasentladungslampe auf sehr geringe Werte heruntergedimmt werden und dadurch nur sehr unökonomisch und lebensdauerverkürzend betrieben werden.müsste (sofern sie überhaupt dimmfähig ist), braucht nur die OLED eingeschaltet zu werden.

Auf diese Weise trägt die Gasentladungslampe die Hauptlast, und die OLED kommt nur in wenigen Stunden zum Einsatz.

Die Abstrahlcharakteristik beider Beleuchtungskomponenten ist etwa gleich, und durch die unveränderte Geometrie der Kombinationsleuchte kann sie in gleicher Weise verwendet werden, wie eine Gasentladungslame allein.

Der Einsatz der OLED hat bei geringen Dimmwerten der Gasentladungslampe zusätzlich den Vorteil, dass die Lichtabstrahlung viel ruhiger und gleichförmiger ist, als die der Gasentladungslampe bei kleinen Strömen.

Der Einsatz der OLED erlaubt es ferner, beispielsweise bei niedrigen Dimmwerten, die Farbtemperatur, d.h. die Farbe des von der Kombinationsleuchte abgestrahlten Lichtes, dynamisch zu variieren, ohne Farbmessung einzustellen oder in Verbindung mit einem Farbsensor einzustellen (zu regeln).

Eine zweckmäßige Weiterbildung der Erfindung kann darin bestehen, dass die Gasentladungslampe und die OLED von einem gemeinsamen Betriebsgerät gesteuert sind. Dadurch ist es möglich, die Steuerwerte für die Leuchtstärke und/oder die Farbtemperatur der Gasentladungslampe einerseits und der OLED andererseits in Abhängigkeit von äußeren Parametern, wie beispielsweise der Außenhelligkeit, und/oder in einem bestimmten Verhältnis zueinander eingestellt werden. Ferner ist es dadurch möglich dass die OLED nur bei geringen Dimmstufen der Gasentladungslampe zugeschaltet wird.

Eine Kombinationsleuchte der vorstehend beschriebenen Art eignet sich besonders zur Verwendung als Notbeleuchtung. In diesem Fall kann die Gasentladungslampe im Notbeleuchtungsfall - wenn beispielsweise das Netz ausfällt die die Stromversorgung von einer Batterie übernommen wird - abgeschaltet und die OLED eingeschaltet werden oder ggf. bleiben.

Die OLED kann als Folie auf das transparente Entladungsgefäß der Gasentladungslampe aufgeklebt werden.

Alternativ dazu ist es möglich, dass die OLED zur Bildung einer Schicht auf das transparente Entladungsgefäß der Gasentladungslampe im Vakuum aufgedampft oder durch Ausfällen aus einer Lösung oder durch sog. Spin Coating (das ist ein Tintenstrahl Druckverfahren) aufgebracht wird.

Die Erfindung betrifft ferner ein Verfahren zum Betreiben der zuvor beschriebenen Kombinationsleuchte. Dieses Verfahren ist dadurch gekennzeichnet, dass bei starkem Lichtbedarf nur die Gasentladungslampe eingeschaltet wird, und dass bei geringem Lichtbedarf oder bei Ausfall der regulären Stromversorgung (Notbeleuchtungsfall) oder bei Ausfall der Gasentladungslampe (beispielsweise einem Fehler der Gasentladungslampe wie Wendelbruch oder auftretender Gleichrichteffekt) nur die OLED eingeschaltet wird.

Ein Ausführungsbeispiel der Erfindung wird nachfolgend anhand der Zeichnungen beschrieben.

Es zeigen:
Fig. 1 die Stromversorgung und Steuerung der Kombinationsleuchte ; und
Fig.2 einen Schnitt II - II durch die Kombinationsleuchte nach Figur 1.

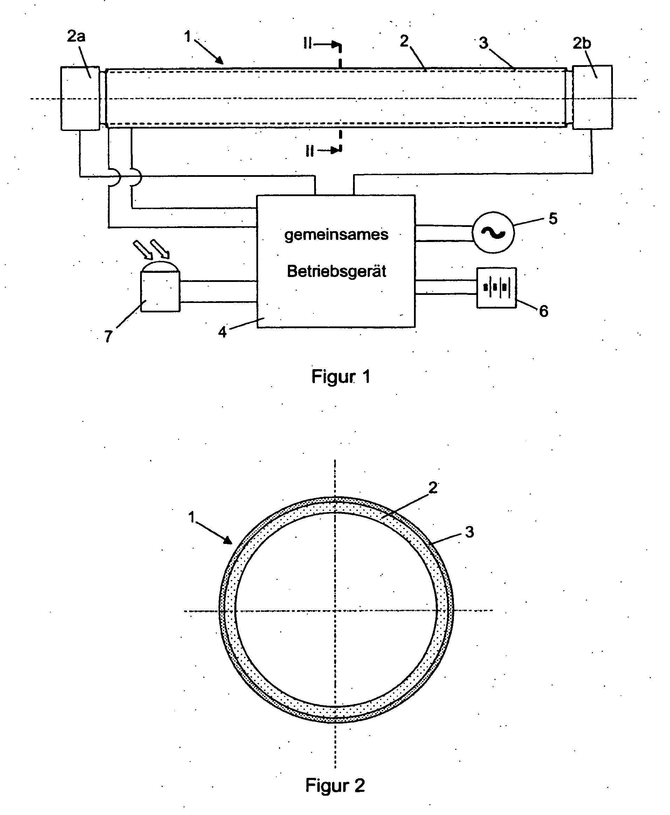

Fig. 1 zeigt die Kombinationsleuchte 1, die aus einer Leuchtstofflampe 2 und einer deren Glaskolben außen umgebenden OLED 3 besteht.

Die Leuchtstofflampe 2 ist eine bevorzugte Ausführungsform einer Gasentladungslampe, wobei alternativ genauso andere Gasentladungslampentypen eingesetzt werden können.

Wie man insbesondere der Figur 2 entnehmen kann, ist die OLED 3 hier als Folie ausgebildet, die außen auf den Glaskolben der Leuchtstofflampe aufgeklebt ist. An den beiden Enden der Leuchtstofflampe 2 befinden sich Anschlussfassungen 2a und 2b, die mit den Anschlussstiften der Leuchtstofflampe 2 in Kontakt stehen. Die Anschlussfassungen sind ihrerseits mit einem gemeinsamen Betriebsgerät 4 für die beiden Leuchtenkomponenten 2 und 3 verbunden. Dementsprechend sind auch die elektrischen Anschlüsse der OLED 3 mit dem Betriebsgerät 4 verbunden.

Das Betriebsgerät 4 ist ferner mit dem Wechselstromnetz 5 und einer Notbeleuchtungsbatterie 6 sowie einem Lichtsensor 7 verbunden.

Wenn großer Beleuchtungsbedarf besteht, beispielsweise weil der Lichtsensor 7 geringe Außenhelligkeit meldet, so schaltet das Betriebsgerät 4 normalerweise die Leuchtstofflampe 2 ein, nicht jedoch die OLED 3.

Wenn in dem zuletzt beschriebenen Betriebszustand die Netzversorgung 5 ausfällt, so schaltet das Betriebsgerät 4 die Leuchtstofflampe 2 aus und die OLED 3 ein.

Wenn trotz geringer Außenhelligkeit geringer Beleuchtungsbedarf besteht und die Leuchtstofflampe eigentlich heruntergedimmt werden müsste, so schaltet das Betriebsgerät 4 die Leuchtstofflampe 2 ebenfalls ganz aus und stattdessen die OLED 3 ein.

Zusätzlich oder alternativ kann auch bei Ausfall der Leuchtstofflampe 2 (beispielsweise bei Wendelbruch oder auftretendem Gleichrichteffekt) das Betriebsgerät 4 diesen Ausfall der Leuchtstofflampe 2 erkennen und daraufhin die OLED 3 anstelle der Leuchtstofflampe 2 ansteuern. Somit ist eine Weiterführung der Beleuchtung durch die Kombinationsleuchte auch nach einem Ausfall der Leuchtstofflampe 2 gesichert. Der Anwender kann durch die geänderter Helligkeit und/ oder geänderte Farbtemperatur (bzw. Farbe) der Leuchte erkennen, dass ein Defekt vorliegt. Bis zum Austausch ist jedoch weiterhin eine Beleuchtung gesichert. Gerade durch die Möglichkeit der OLED 3, im Vergleich zur Leuchtstofflampe 2 Licht mit einer anderen Farbtemperatur abzustrahlen, kann dem Anwender gut der Ausfall der Leuchtstofflampe 2 signalisiert werden, und dennoch weiterhin zumindest eine Grundbeleuchtung sichergestellt werden.

Der Lichtsensor 7 kann auch einen Farbsensor aufweisen. Abhängig von der Messung über den Farbsensor kann auch die Farbtemperatur der Kombinationsleuchte 1 eingestellt oder korrigiert werden. Dabei können die Steuerwerte für die Leuchtstärke und/oder die Farbtemperatur der Leuchtstofflampe 2 einerseits und der OLED 3 andererseits, und/oder in einem bestimmten Verhältnis zueinander eingestellt werden.

In einer bevorzugten variante kann die Helligkeit der Leuchtstofflampe 2 auf einen gewünschten Helligkeitswert (beispielsweise die maximale Helligkeit) eingestellt werden und über die Ansteuerung der OLED 3 die Farbtemperatur mittels des Farbsensors (im Lichtsensor 7 enthalten) eingestellt werden.

Die Leuchtstofflampe 2 ebenfalls und die OLED 3 werden beide durch das Betriebsgerät 4 betrieben. Das Betriebsgerät 4 kann eine einzige Betriebsschaltung zur Ansteuerung der Leuchtstofflampe 2 und die OLED 3 aufweisen, wobei die Betriebsschaltung ihren Betriebsmodus jeweils an die für den Betrieb des zu betreibenden Leuchtmittels anpasst. Beispielsweise kann die Betriebsschaltung für die Ansteuerung der Leuchtstofflampe 2 als resonante Halbbrücke betrieben werden und für die Ansteuerung die OLED 3 kann die Betriebsschaltung als Tiefsetzsteller betrieben werden. Die Betriebsschaltung kann beispielsweise als resonante Halbbrücke ausgebildet sein, bei einem Betrieb als Tiefsetzsteller kann der untere Schalter des Schaltreglers dauerhaft geöffnet sein. Der Betriebsmodus der Betriebsschaltung kann dadurch geändert werden, dass die Ansteuerung der Schaltelemente der Betriebsschaltung an den jeweils erforderlichen Betriebsmodus angepasst wird.

Es ist aber auch möglich, dass das Betriebsgerät 4 jeweils eine spezifische Betriebsschaltung zur Ansteuerung der Leuchtstofflampe 2 und eine spezifische Betriebsschaltung zur Ansteuerung der OLED 3 aufweist.

Beispielsweise kann die Betriebsschaltung für die Ansteuerung der Leuchtstofflampe 2 als resonante Halbbrücke ausgeführt sein und für die Ansteuerung die OLED 3 kann die Betriebsschaltung als Schaltregler, beispielsweise als Tiefsetzsteller, isolierter Sperrwandler (Flyback-Konverter) oder resonanter Wandler wie beispielsweise als resonante Halbbrücke ausgeführt sein. Die beiden Betriebsschaltungen können dabei gleichzeitig oder auch alternativ zueinander aktiviert werden, je nach gewünschter Art des Betriebes der Leuchtstofflampe 2 und der OLED 3. Beide Betriebsschaltungen können durch eine gemeinsame aktive Leistungsfaktorkorrekturschaltung gespeist werden, beispielsweise durch einen Boost oder SEPIC PFC.

Die Betriebsschaltung für die Ansteuerung der OLED 3 kann so ausgeführt sein, dass sie von einer Notbeleuchtungsbatterie 6 gespeist wird. Diese Betriebsschaltung kann weiterhin eine Batterieladeschaltung aufweisen, die die Notbeleuchtungsbatterie 6 bei Anliegen einer Netzspannung aufladen kann.

Fig. 2 zeigt einen Schnitt II - II durch die Kombinationsleuchte 1 nach Figur 1. Die OLED 3 kann als Folie auf das transparente Entladungsgefäß der Gasentladungslampe 2 aufgeklebt sein. Alternativ dazu ist es möglich, dass die OLED 3 zur Bildung einer Schicht auf das transparente Entladungsgefäß der Gasentladungslampe 2 im Vakuum aufgedampft oder durch Ausfällen aus einer Lösung oder durch sog. Spin Coating (das ist ein Tintenstrahl-Druckverfahren) aufgebracht wird.

## Patentansprüche

1. Kombinationsleuchte, bestehend aus
(a) einer Gasentladungslampe (2), deren Entladungsgefäß aus transparentem Material, vorzugsweise Glas ist, und
(b) einer OLED (3) in Form einer transparenten dünnen Schicht oder Folie, die außen auf dem transparenten Entladungsgefäß der Gasentladungslampe (2) aufgebracht ist.

2. Kombinationsleuchte nach Anspruch 1,
**dadurch gekennzeichnet,**
**dass** die Gasentladungslampe (2) eine Leuchtstofflampe ist.

3. Kombinationsleuchte nach Anspruch 1 oder 2,
**dadurch gekennzeichnet,**
**dass** die Gasentladungslampe (2) und die OLED (3) von einem gemeinsamen Betriebsgerät (4) gesteuert sind.

4. Kombinationsleuchte nach einem der vorher stehenden Ansprüche,
**dadurch gekennzeichnet,**
**dass** die Steuerwerte für die Leuchtstärke und/oder die Farbtemperatur der Gasentladungslampe (2) einerseits und der OLED (3) andererseits in Abhängigkeit von äußeren Parametern, wie beispielweise der Außenhelligkeit, und/oder in einem bestimmten Verhältnis zueinander eingestellt werden.

5. Kombinationsleuchte nach Anspruch 4,
**dadurch gekennzeichnet,**
**dass** die OLED (3) nur bei geringen Dimmstufen der Gasentladungslampe (2) zugeschaltet wird.

6. Kombinationsleuchte nach einem der vorher stehenden Ansprüche,
**dadurch gekennzeichnet,**
**dass** sie als Notbeleuchtung verwendet wird.

7. Kombinationsleuchte nach Anspruch 6,
**dadurch gekennzeichnet,**
**dass** die Gasentladungslampe (2) im Notbeleuchtungsfall abgeschaltet und die OLED eingeschaltet wird oder bleibt.

8. Kombinationsleuchte nach Anspruch 6,
**dadurch gekennzeichnet,**
**dass** die Gasentladungslampe (2) bei Netzausfall abgeschaltet und die OLED (3) eingeschaltet wird oder bleibt.

9. Kombinationsleuchte nach einem der vorher stehenden Ansprüche,
**dadurch gekennzeichnet,**
**dass** die OLED (3) als Folie auf das transparente Entladungsgefäß der Gasentladungslampe aufgeklebt ist.

10. Kombinationsleuchte nach einem der Ansprüche 1-9,
**dadurch gekennzeichnet,**
**dass** die die OLED (3)bildende dünne Schicht durch Aufdampfen im Vakuum oder durch Ausfällen aus einer Lösung oder durch spinn-coating (Tintenstrahl - Druckverfahren) auf dem transparenten Entladungsgefäß der Gasentladungslampe (2) aufgebracht wird.

11. Verfahren zum Betreiben einer Kombinationsleuchte, bestehend aus
(a)einer Gasentladungslampe (2), deren Entladungsgefäß aus transparentem Material, vorzugsweise Glas besteht, und
(b)einer OLED (3) in Form einer transparenten dünnen Schicht oder Folie, die außen auf dem transparenten Entladungsgefäß der Gasentladungslampe (2) aufgebracht ist,
**dadurch gekennzeichnet,**
**dass** bei starkem Lichtbedarf nur die Gasentladungslampe (2) eingeschaltet wird, und dass bei geringem Lichtbedarf oder bei Ausfall der regulären Stromversorgung (Notbeleuchtungsfall) oder bei der Ausfall der Gasentladungslampe (2) nur die OLED (3) eingeschaltet wird.

## Claims

1. Combination luminaire, consisting of
(a) a gas discharge lamp (2), the discharge tube of which is of transparent material, preferably glass, and
(b) an OLED (3) in the form of a transparent thin layer or film, which is applied externally to the transparent discharge tube of the gas discharge lamp (2).

2. Combination luminaire according to claim 1, **characterised by** that the gas discharge lamp (2) is a fluorescent lamp.

3. Combination luminaire according to claim 1 or 2, **characterised by** that the gas discharge lamp (2) and the OLED (3) are controlled by a combined operating device (4).

4. Combination luminaire according to one of the preceding claims, **characterised by** that the control values for the luminous intensity and/or the colour temperature of the gas discharge lamp (2) on the one hand and of the OLED (3) on the other hand are set depending on external parameters, such as the external brightness, for example, and/or in a certain ratio to one another.

5. Combination luminaire according to claim 4, **characterised by** that the OLED (3) is only switched on at low dimming levels of the gas discharge lamp (2).

6. Combination luminaire according to one of the preceding claims, **characterised by** that it is used as emergency lighting.

7. Combination luminaire according to claim 6, **characterised by** that the gas discharge lamp (2) is switched off in the case of emergency lighting and the OLED is switched on or remains switched on.

8. Combination luminaire according to claim 6, **characterised by** that the gas discharge lamp (2) is switched off in the event of a mains power failure and the OLED (3) is switched on or remains switched on.

9. Combination luminaire according to one of the preceding claims, **characterised by** that the OLED (3) is glued onto the transparent discharge tube of the gas discharge lamp as a film.

10. Combination luminaire according to one of claims 1-9, **characterised by** that the thin layer forming the OLED (3) is applied by vapour deposition in a vacuum or by precipitation from a solution or by spin coating (inkjet printing process) to the transparent discharge tube of the gas discharge lamp (2).

11. Method for operating a combination luminaire, consisting of
(a) a gas discharge lamp (2), the discharge tube of which consists of transparent material, preferably glass, and
(b) an OLED (3) in the form of a transparent thin layer or film, which is applied externally to the transparent discharge tube of the gas discharge lamp (2),
**characterised by** that if the light demand is high, only the gas discharge lamp (2) is switched on, and that if the light demand is low or if the normal power supply fails (emergency lighting case) or if the gas discharge lamp (2) fails, only the OLED (3) is switched on.

## Revendications

1. Luminaire mixte, comprenant
(a) une lampe à décharge (2) dont le tube de décharge est en matériau transparent, de préférence en verre, et
(b) une diode électroluminescente organique (OLED, 3) sous la forme d'une couche ou feuille mince transparente déposée extérieurement sur le tube de décharge transparent de la lampe à décharge (2).

2. Luminaire mixte selon la revendication 1, **caractérisé en ce que** la lampe à décharge (2) est un tube fluorescent.

3. Luminaire mixte selon la revendication 1 ou la revendication 2, **caractérisé en ce que** la lampe à décharge (2) et l'OLED (3) sont commandées par un appareil électronique (4) commun.

4. Luminaire mixte selon l'une des revendications précédentes, **caractérisé en ce que** les valeurs de commande de l'intensité lumineuse et/ou de la température de couleur de la lampe à décharge (2) d'une part et de l'OLED (3) d'autre part sont réglées en fonction de paramètres extérieurs tels que, par exemple, la luminosité extérieure et/ou selon un rapport déterminé entre elles.

5. Luminaire mixte selon la revendication 4, **caractérisé en ce que** l'OLED (3) est activée uniquement à de faibles niveaux d'atténuation de l'intensité lumineuse de la lampe à décharge (2).

6. Luminaire mixte selon l'une des revendications précédentes, **caractérisé en ce qu'**il est utilisé comme éclairage de secours.

7. Luminaire mixte selon la revendication 6, **caractérisé en ce que** la lampe à décharge (2) est désactivée en cas d'éclairage de secours et l'OLED est ou reste activée.

8. Luminaire mixte selon la revendication 6, **caractérisé en ce que** la lampe à décharge (2) est désactivée en cas de panne de courant et l'OLED (3) est ou reste activée.

9. Luminaire mixte selon l'une des revendications précédentes, **caractérisé en ce que** l'OLED (3) est réalisée sous la forme d'une feuille collée sur le tube de décharge transparent de la lampe à décharge.

10. Luminaire mixte selon l'une des revendications 1 à 9, **caractérisé en ce que** la couche mince formant l'OLED (3) est déposée par dépôt en phase vapeur sous vide ou par précipitation à partir d'une solution ou par enduction centrifuge (procédé d'impression par jet d'encre) sur le tube de décharge transparent de la lampe à décharge (2).

11. Procédé de fonctionnement d'un luminaire mixte comprenant
(a) une lampe à décharge (2) dont le tube de décharge est en matériau transparent, de préférence en verre, et
(b) une OLED (3) sous la forme d'une couche ou feuille mince transparente déposée extérieurement sur le tube de décharge transparent de la lampe à décharge,
**caractérisé en ce que** seule la lampe à décharge (2) est activée lorsque le besoin de lumière est élevé et **en ce que** seule l'OLED (3) est activée lorsque le besoin de lumière est faible ou en cas de panne de l'alimentation électrique régulière (cas d'éclairage de secours) ou en cas de panne de la lampe à décharge (2).
